# EUROPEAN PATENT APPLICATION

(11) **EP 3 564 879 A1**
(43) Date of publication of application: **06.11.2019**
(21) Application number: 18170713.4
(22) Date of filing: 03.05.2018
(51) Int. Cl.: G06Q 10/08, G06Q 30/02

(54) **METHOD AND SYSTEM FOR DISPLAYING CONTENTS**

(71) Applicant: VIOOH LIMITED, London W1U 7EU (GB)
(72) Inventor: BELL, Ian, 06640 Saint Jeannet (FR); CHALLITA, Elias, 75006 Paris (FR); MAGATTI, Davide, London, W93BB (GB); LAVOLLÉE, Stephan, Beaconsfield, HP9 2BA (GB)
(74) Representative: Plasseraud IP

(57) **Abstract**

A method for displaying contents from advertisement campaigns on displays belonging to an OOH inventory, by an artificial intelligence module which is run by allocation server and which is trained to optimally allocate displays and timing to advertisement campaigns.

## Description

### TECHNICAL FIELD

The present disclosure relates to methods and systems for displaying contents for Out Of Home (OOH) Advertisement.

More particularly, the present disclosure concerns out of home methods and systems for displaying contents on specific displays selected from an OOH (Out Of Home) inventory based on campaign features.

### PRIOR ART

WO2009/144459 relates to apparatus for and methods of: determining the availability of a resource; processing a resource availability value map array; constructing a resource time-availability query; processing a resource availability value map in dependence on a resource time-availability query; matching a record to an array of pre-existing records according to matching criteria; processing matching period value maps; determining the extent to which the availability of a resource matches a resource availability request; and modifying a time-availability query.

### OBJECTS

One object of the present disclosure is a computer implemented method for displaying contents from advertisement campaigns on displays belonging to an OOH inventory, the computer implemented method including steps of:
- receiving on at least one allocation server, campaign data from a specific advertisement campaign including at least a date range, a targeted environment (i.e. geographical environment such as location or type of location) and a client target;
- allocating to the specific advertisement campaign, by the at least one allocation server, a specific set of displays from the OOH inventory and timing for displaying the specific advertisement campaign on each display of said specific set of displays, to fit the campaign data based at least on individual location data, availability data and audience data of the respective displays of the OOH inventory;
- dispatching contents corresponding to the specific advertisement campaign to the specific set of displays,
wherein allocating said specific set of displays and timing is carried out by an artificial intelligence module which is run by said at least one allocation server, said artificial intelligence module being trained to optimally allocate displays and timing to advertisement campaigns.

In embodiments of the above method, one may further use one or several of the following features and any combination thereof:
- said OOH inventory includes digital displays each having at least one electronic screen and a player adapted to play contents on said at least one electronic screen, and dispatching contents corresponding to the specific advertisement campaign to the specific set of displays, includes electronically sending said contents and corresponding timing to the respective players of specific digital displays being part of the specific set of displays, memorizing said contents and timing by said players and playing said contents according to said timing on said at least one electronic screen;
- said timing allocated to the specific advertisement campaign on a display includes a share of time;
- said audience data of the respective displays of the OOH inventory includes respective audience data for various periods of time in the day, and said share of time is determined for each period of time;
- the artificial intelligence module is trained to optimally allocate displays and timing to campaigns based on a set of predetermined rules;
- said audience data of the respective displays of the OOH inventory is combined with said client target of the specific advertisement campaign to determine an impact value of the respective displays of the OOH inventory on said client target for said specific advertisement campaign, and said set of predetermined rules includes that: the higher the impact value of a period of time on a display for said specific advertisement campaign, the higher share of time is allocated to said specific advertisement campaign for this period of time on this display (which avoids uselessly monopolizing displays having low impact for the specific advertisement campaign);
- said audience data of the respective displays of the OOH inventory is combined with said client target of other advertisement campaigns to determine respective impact value of the respective displays of the OOH inventory on said client target for said other advertisement campaigns, and said set of predetermined rules includes that: the higher the impact value of a period of time on a display for said other advertisement campaigns, the lower share of time is allocated to said specific advertisement campaign for this period of time on this display (which maximizes the number of advertisement campaigns that can be sold);
- said audience data of the respective displays of the OOH inventory are combined with said client target of the specific advertisement campaign to determine an impact value of the respective displays of the OOH inventory on said client target for said specific advertisement campaign, and said set of predetermined rules includes that: the higher the impact value of a period of time on a display for said specific campaign, the higher priority is given to allocation of this period of time on this display to the specific advertisement campaign;
- said availability data of the respective displays of the OOH inventory determine a level of booking of the respective displays of the OOH inventory and said set of predetermined rules includes that: the lower the level of booking of a display, the higher priority is given to allocation of this display to the specific advertisement campaign;
- said availability data of the respective displays of the OOH inventory include a minimum value and a minimum value for the share of time which may be allocated to a campaign, and said set of predetermined rules includes that: the share of time which is allocated to the campaign on this display is either 0, or is comprised between the minimum value and the maximum value;
- said set of predetermined rules includes that: displays and timing previously allocated to other advertisement campaigns may be re-allocated when allocating displays and timing to the specific advertisement campaign;
- said set of predetermined rules includes that: displays allocated to said specific advertisement campaign are distributed throughout the targeted environment;
- said artificial intelligence module includes at least one neural network;
- said at least one neural network includes at least a first layer and a second layer;
- said first layer has 7 sigmoid neurons and said second layer has 3 sigmoid neurons;
- said client target includes at least one target number of impressions, said first layer successively scans all displays of the OOH inventory and computes a vote representing a number of impressions being able to be provided by a display being scanned, among the target number of impressions, and said second layer determines the timing allocated to said current advertisement campaign on said display being scanned, based on said vote and on a set of predetermined rules;
- the method includes training said artificial intelligence module by machine learning;
- the method includes creating artificially generated advertisement campaigns and training said artificial intelligence module on said artificially generated advertisement campaigns;
- said artificial intelligence module is run simultaneously on a plurality of allocation servers;
- the data relative to the OOH inventory is contained in a OOH inventory database and said at least one allocation server has a RAM in which said OOH inventory database is entirely charged as objects modelled with bitmask.

Another object of the present disclosure is a computer implemented method for displaying contents from advertisement campaigns on displays belonging to an OOH inventory, the computer implemented method including steps of:
- receive on a plurality of allocation servers, campaign data from a specific advertisement campaign including at least a date range, a targeted environment and a client target;
- allocate to the specific advertisement campaign, by said plurality of allocation servers, a specific set of displays from the OOH inventory and timing for displaying the specific advertisement campaign on each display of said specific set of displays, to fit the campaign data based at least on individual location data, availability data and audience data of the respective displays of the OOH inventory;
- dispatching contents corresponding to the specific advertisement campaign to the specific set of displays.

Another object of the present disclosure is a computer implemented method for displaying contents from advertisement campaigns on displays belonging to an OOH inventory, the computer implemented method including steps of:
- receiving on at least one allocation server, campaign data from a specific advertisement campaign including at least a date range, a targeted environment and a client target;
- allocating to the specific advertisement campaign, by the at least one allocation server, a specific set of displays from the OOH inventory and timing for displaying the specific advertisement campaign on each display of said specific set of displays, to fit the campaign data based at least on individual location data, availability data and audience data of the respective displays of the OOH inventory;
the system being adapted to dispatch contents corresponding to the specific advertisement campaign to the specific set of displays,
wherein the data relative to the OOH inventory is contained in a OOH inventory database and said at least one allocation server has a RAM in which said OOH inventory database is entirely charged as objects modelled with bitmask.

Another object of the present disclosure is a system for displaying contents from advertisement campaigns on displays belonging to an OOH inventory, the system including at least one allocation server which is programmed for:
- receiving campaign data from a specific advertisement campaign including at least a date range, a targeted environment and a client target;
- allocating to the specific advertisement campaign, a specific set of displays from the OOH inventory and timing for displaying the specific advertisement campaign on each display of said specific set of displays, to fit the campaign data based at least on individual location data, availability data and audience data of the respective displays of the OOH inventory;
- dispatching contents corresponding to the specific advertisement campaign to the specific set of displays,
wherein said at least one allocation server has an artificial intelligence module which is trained to optimally allocate displays and timing to advertisement campaigns.

In embodiments of the above system, one may further use one or several of the following features and any combination thereof:
- said OOH inventory includes digital displays each having at least one electronic screen and a player adapted to play contents on said at least one electronic screen, wherein said at least one allocation server is programmed to send electronically said contents and corresponding timing to the respective players of specific digital displays being part of the specific set of displays, and wherein said players are programmed to memorize said contents and timing and to play said contents according to said timing on said at least one electronic screen;
- said timing allocated to the specific advertisement campaign on a display includes a share of time;
- said audience data of the respective displays of the OOH inventory include respective audience data for various periods of time in the day, and said share of time is determined for each period of time;
- the artificial intelligence module is trained to optimally allocate displays and timing to campaigns based on a set of predetermined rules;
- said audience data of the respective displays of the OOH inventory are combined with said client target of the specific advertisement campaign to determine an impact value of the respective displays of the OOH inventory on said client target for said specific advertisement campaign, and said set of predetermined rules includes that: the higher the impact value of a period of time on a display for said specific advertisement campaign, the higher share of time is allocated to said specific advertisement campaign for this period of time on this display (which avoids uselessly monopolizing displays having low impact for the specific advertisement campaign);
- said audience data of the respective displays of the OOH inventory are combined with said client target of other advertisement campaigns to determine respective impact value of the respective displays of the OOH inventory on said client target for said other advertisement campaigns, and said set of predetermined rules includes that: the higher the impact value of a period of time on a display for said other advertisement campaigns, the lower share of time is allocated to said specific advertisement campaign for this period of time on this display (which maximizes the number of advertisement campaigns that can be sold);
- said audience data of the respective displays of the OOH inventory is combined with said client target of the specific advertisement campaign to determine an impact value of the respective displays of the OOH inventory on said client target for said specific advertisement campaign, and said set of predetermined rules includes that: the higher the impact value of a period of time on a display for said specific campaign, the higher priority is given to allocation of this period of time on this display to the specific advertisement campaign;
- said availability data of the respective displays of the OOH inventory determine a level of booking of the respective displays of the OOH inventory and said set of predetermined rules includes that: the lower the level of booking of a display, the higher priority is given to allocation of this display to the specific advertisement campaign;
- said availability data of the respective displays of the OOH inventory include a minimum value and a minimum value for the share of time which may be allocated to a campaign, and said set of predetermined rules includes that: the share of time which is allocated to the campaign on this display is either 0, or is comprised between the minimum value and the maximum value;
- said set of predetermined rules includes that: displays and timing previously allocated to other advertisement campaigns may be re-allocated when allocating displays and timing to the specific advertisement campaign;
- said set of predetermined rules includes that: displays allocated to said specific advertisement campaign are distributed throughout the targeted environment;
- said artificial intelligence module includes at least one neural network;
- said at least one neural network includes at least a first layer and a second layer;
- said first layer has 7 sigmoid neurons and said second layer has 3 sigmoid neurons;
- said client target includes at least one target number of impressions, said first layer is adapted to successively scan all displays of the OOH inventory and is adapted to compute a vote representing a number of impressions being able to be provided by a display being scanned, among the target number of impressions, and said second layer is trained to determine the timing allocated to said current advertisement campaign on said display being scanned, based on said vote and on a set of predetermined rules;
- said first layer is fed by at least a first input receiving data related to the client target, a second input receiving data related to audience corresponding to displays and timing already allocated for the specific advertisement campaign, (possibly a third input receiving timing already allocated to other advertisement campaigns on a display being scanned), an additional (fourth) input receiving data corresponding to all impressions available on the display being scanned for the client target (and possibly a fifth input receiving data representing a frame ratio between a width of the display being scanned and a height of the display being scanned);
- said artificial intelligence module is trained by machine learning;
- said artificial intelligence module is trained on artificially generated advertisement campaigns;
- said artificial intelligence module is run on several allocation servers;
- the data relative to the OOH inventory are contained in a OOH inventory database and said at least one allocation server has a RAM in which said OOH inventory database is entirely charged as objects modelled with bitmask.

Another object of the present disclosure is a system for displaying contents from advertisement campaigns on displays belonging to an OOH inventory, the system including a plurality of allocation servers programmed to:
- receive campaign data from a specific advertisement campaign including at least a date range, a targeted environment and a client target;
- allocate to the specific advertisement campaign, a specific set of displays from the OOH inventory and timing for displaying the specific advertisement campaign on each display of said specific set of displays, to fit the campaign data based at least on individual location data, availability data and audience data of the respective displays of the OOH inventory; the system being adapted to dispatch contents corresponding to the specific advertisement campaign to the specific set of displays.

Another object of the present disclosure is a system for displaying contents from advertisement campaigns on displays belonging to an OOH inventory, the system including at least one allocation server programmed for:
- receive campaign data from a specific advertisement campaign including at least a date range, a targeted environment and a client target;
- allocate to the specific advertisement campaign, a specific set of displays from the OOH inventory and timing for displaying the specific advertisement campaign on each display of said specific set of displays, to fit the campaign data based at least on individual location data, availability data and audience data of the respective displays of the OOH inventory;
the system being adapted to dispatch contents corresponding to the specific advertisement campaign to the specific set of displays,
wherein the data relative to the OOH inventory are contained in a OOH inventory database and said at least one allocation server has a RAM in which said OOH inventory database is entirely charged as objects modelled with bitmask.

### BRIEF DESCRIPTION OF THE DRAWINGS

Other features and advantages will appear from the following description of one embodiment, given by way of non-limiting example, with regard to the drawings.

In the drawings:
- Figure 1 shows an example of geographic distribution of displays in a system for displaying contents;
- Figure 2 is a block diagram showing physical components in an example of system for displaying contents;
- Figure 3 is a block diagram showing some of the software components in the system of Figure 2;
- Figure 4 is a diagram showing a possible neural network for allocating displays from an OOH inventory to a campaign;
- and Figure 5 illustrates operation of the neural network of Figure 4.

### MORE DETAILED DESCRIPTION

In the various drawings, the same references designate identical or similar elements.

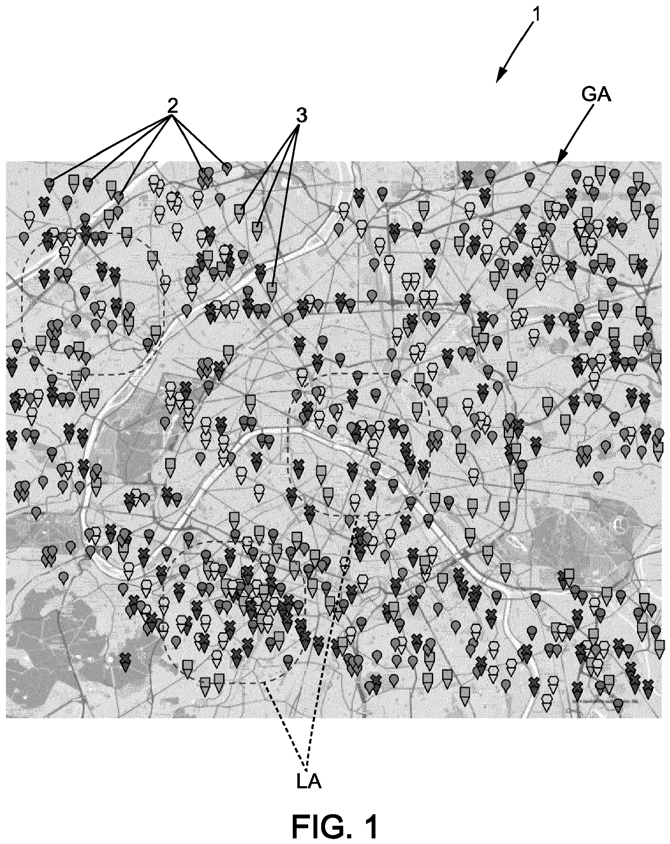

Figure 1 shows a an Out Of Home (OOH) advertisement system 1 for displaying contents on displays 2, 3 in a geographical area GA which can be as large as worldwide, or a country, a region, a town, etc. The displays may belong to various local areas LA in geographical area GA. The displays are also called frames in the technical field of OOH advertisement. The whole set of displays forms an OOH inventory.

The displays 2, 3 may be of several types, represented by different symbols on Figure 1. The different types of displays may correspond to different formats or designs, and to different media types such as "digital" and "paper".

At least part of the displays may be digital displays 2.

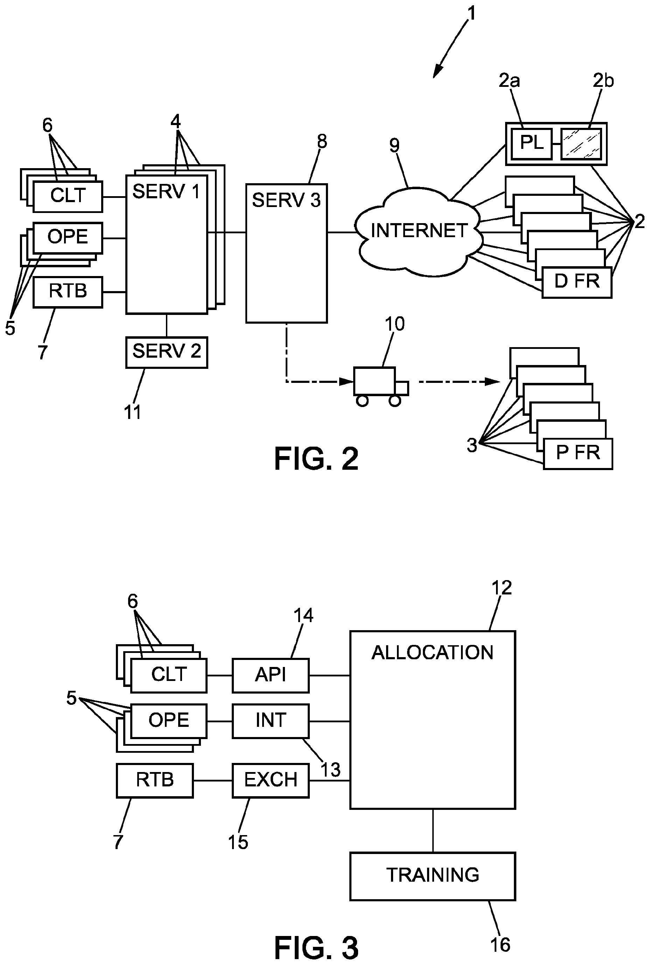

As shown on Figure 2, digital displays 2 (D FR) may include a player 2a (i.e. a computer having a processor and a mass memory) controlling an electronic screen 2b such as a LED electronic screen, an LCD electronic screen or any other type of known electronically addressable screen. The contents played by player 2a may be images, movies, web pages or any other type of digital content which may be displayed on electronic screen 2b.

Paper displays 3 (P FR) may be backlit or not, fixed or moving (e.g. rolled on motorized rollers), and the media may be paper or any suitable synthetic sheet of material.

The OOH advertisement system 1 further includes at least one allocation server 4 (SERV 1), for instance a plurality of allocation servers 4.

Said at least one allocation server 4 is programmed to receive campaign data regarding advertisement campaigns and allocate displays 2, 3 and timing thereof to the advertisement campaigns.

The campaign data may be received *inter alia* from computer workstations 5 used by operators dedicated to the system 1 (OPE), from computer workstations 6 used by clients (CLT), or from a real time bidding system 7 (RTB).

Once said at least one allocation server 4 has allocated displays 2, 3 and timing thereof to the advertisement campaigns, the identification of the allocated displays and the allocated timing may be sent to at least one operating server 8 (SERV 3) which may, immediately or later, dispatch contents corresponding to the advertisement campaigns and said timing of presentation of the contents to the displays 2, 3. The contents may be received on the operating server 8 through the at least one allocating server 4 or from any outside source, for instance based on an identification of the contents pertaining to the campaign data.

In the case of digital displays 2, the contents and timings may be sent to the players 2a of the selected digital displays by any WAN, for instance though the internet 9. The players 2a memorize the contents and timing, and then play the contents according to the memorized timing.

In the case of paper displays 3, the dispatching of contents is done by operators 10 going on site to change posters.

The at least one allocation server 4 may further communicate with one or several additional servers 11 (SERV 2), for instance at least one additional server 11 for training artificial intelligence run on the at least one allocation server 4, as will be explained later.

As shown on Figure 3, the at least one allocation server 4 may run a software called allocation module 12 for allocating said specific set of displays and timing. Allocation module 12 may communicate with operators workstations 5 through a simple interface software 13 (INT), with the client workstations through an API 14, and through the real time bidding system 7 through a specific interface software 15 (EXCH) enabling automatic exchange of data for instance under the protocol "Open RTB".

When the at least one allocation server 4 is composed of a plurality of allocation servers 4, the allocation module may optionally be run simultaneously on all allocation servers 4 of said plurality to enhance speed.

The data relative to the OOH inventory may be contained in an OOH inventory database. Optionally, said at least one allocation server 4 may have a RAM in which said OOH inventory database is entirely charged as objects modelled with bitmask to enhance speed.

The OOH inventory database may contain at least individual type data, location data, availability data and audience data of the respective displays of the OOH inventory.

Type data may include for instance data such as:
- Channel: for instance "airport", "large format" or "street furniture";
- Media type: for instance digital, paper, digital and paper;
- Format: display format;
- Etc.

Location data may include the position of the display in the geographical area GA, possibly a local area LA to which belongs the display, possibly proximity with some points of interest, etc.

Availability data may include the already booked share of time (SOT) in % of the display (i.e. the share of time already allocated to advertisement campaigns) for every calendar day and every period of time of the calendar day, and the references of the corresponding advertisement campaigns. Every day may be divided in a number of periods of time, which may be separately booked. These periods of time may be all of equal duration, or not. One non-limiting example of such periods of time is:
- period 1: 6h-10h;
- period 2: 10h-16h;
- period 3: 16h-19h;
- period 4: 19h-6h.

For paper displays 3 with fixed posters, the share of time allocated to an advertisement campaign will be either 100 %, or 0, and will be the same for all periods of time for a number of days.

For paper displays 3 with rolling or otherwise movable posters, the share of time allocated to an advertisement campaign will usually be either a predetermined value (e.g. 25 % for a display having a roll of 4 posters which are sequentially displayed) or or 0, and will be the same for all periods of time for a number of days.

Audience data may include, for each calendar day and each period of time, for instance:
- Demographics, e.g. a statistical number of persons being in view range of the display, broken down by audience categories such as for instance (non-limiting examples): age, sex, social categories, main shopper / main shopper + kids, etc.
- Frame rating: statistical % of the demographics actually looking at the display. Frame rating determines the audience volume, i.e. the statistical number of persons of each audience category actually looking at the display within the considered time period. For display i having frame rating R and demographics Dᵢⱼₖ in audience category j for the time period k, the corresponding audience volume Vᵢⱼₖ will be Vᵢⱼₖ = Dᵢⱼₖ * R.

Allocation module 12 may be an artificial intelligence module 12 trained to optimally allocate displays and timing to advertisement campaigns.

Said artificial intelligence module 12 may be trained by machine learning (more precisely "reinforcement learning"), for instance offline, in a training module 16 run by additional server 11.

The training module 16 may be programmed to create a large number of artificially generated advertisement campaigns (synthetic campaigns), and to train said artificial intelligence module on said artificially generated advertisement campaigns. Training on artificially generated advertisement campaigns makes the algorithm capable of analysing the entire universe of possible combinations. Whereas, training only on historic data limits it to handling what has already happened, which will yield mediocre results in cases of a slight change in the campaigns.

In one embodiment, artificial intelligence module 12 may include a neural network 17.

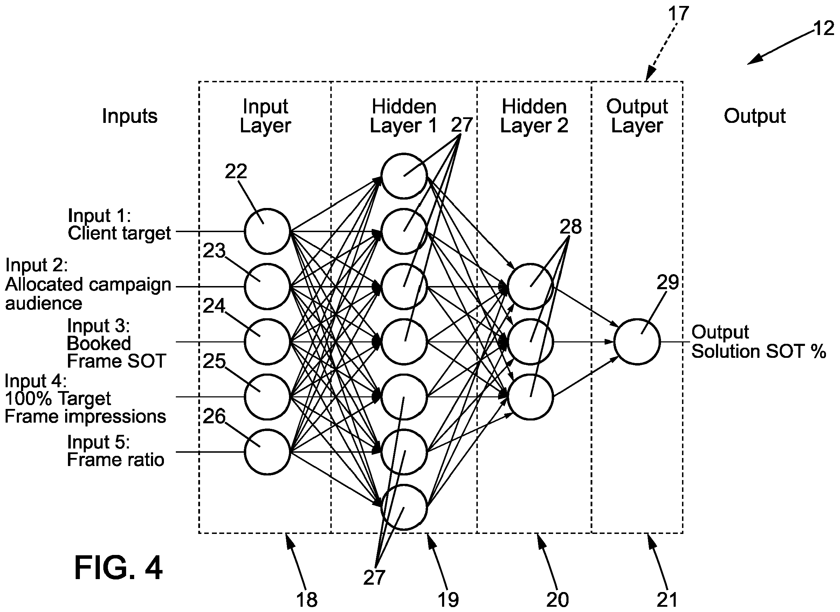

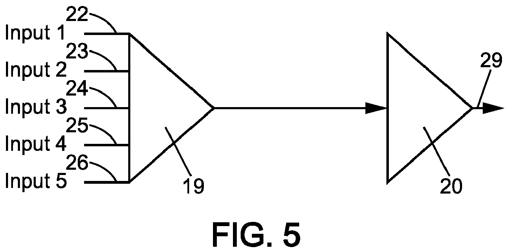

For instance, a particularly advantageous embodiment is shown on Figures 4 and 5, where neural network 17 has two layers 19, 20 of sigmoid neurons.

More particularly, neural network 17 may have:
- a number of inputs connected to input nodes 22-26 in an input layer 18 (there are 5 inputs and input nodes in the example of Figures 4-5, but this number may be varied from one embodiment to another);
- the first layer 19 of sigmoid neurons, having a number of sigmoid neurons 27 (for instance 7 sigmoid neurons 27) each connected to each input node 22-26;
- the second layer 20 of sigmoid neurons, having a number of sigmoid neurons 28 (for instance 3 sigmoid neurons 28) each connected to each sigmoid neurons 27;
- an output layer 21, having for instance one output node 29 connected to all sigmoid neurons 28.

The neural network 17 may have a learning rate of 0.1 and a Gamma value of 1, for instance.

The neural network 17 perpetually improves itself through continuous observation. Thus, if the market tends to move to particular technologies of frame format distributions, the system will be able to learn and later recognise these market changes. As the neural network learns, the market tendencies are translated into patterns and become embedded within the neural network and its learning. Neural networks are particularly effective at solving classification problems i.e. where a certain series of inputs will be classified in a certain way thus providing the ability to recognise market tendencies. The training is not done in a production environment, it is periodic and offline on additional server 12. Market trends may be captured by replaying advertisement campaigns from the history, and may be taken into consideration for generating new synthetic campaigns to train the neural network.

In a variant, instead of having a two layer neural network, a single stage neural network might be used. Such neural network may be based on Q-learning. Q-learning is a model free reinforcement learning technique that enables an automated system to make decisions by evaluating an action-value function. The system chooses actions based on their usefulness to attain objectives as defined by a given policy.

Operation of the allocation module 12 will now be explained in more details.

Regularly, a new advertisement campaign (herein called "specific advertisement campaign" by way of convention) is to be treated by the allocation module 12 for allocation of displays 2, 3 and of timing on said displays to said specific advertisement campaign. "Timing" may include for instance SOT for each calendar day and each period of time of the day.

The allocation process for such specific advertisement campaign is triggered by reception of campaign data by the allocation module 12, from any of the above-described software modules 13-15.

Such campaign data may include for instance at least a date range, a targeted environment (i.e. geographical environment such as location or type of location) and a client target.

The date range is the range of dates in which the specific advertisement campaign has to take place.

The targeted environment is the location where the specific advertisement campaign has to take place. It may be all or part of geographical area GA.

The client target may include an audience volume, possibly broken down by audience categories.

The campaign data may include other data, for instance:
- Type data requested for the specific advertisement campaign (such as Channel, Media type, Format as defined above);
- Time pattern: requested days in the week, requested periods of times in these days, etc.;
- Proximity: requested proximity of the allocated displays with a point of interest;

- Requested number of displays;
- Budget;
- Type of environment, e.g. retail zone / roadside;
- Requested quality of contact (statistical parameter of the display reflecting probability that the content will be recalled by the audience); etc.

Based on the campaign data, the allocation module 12 allocates to the specific advertisement campaign, a specific set of displays from the OOH inventory and timing for displaying the specific advertisement campaign on each display of said specific set of displays, to fit the campaign data.

The allocation module 12 may allocate said specific set of displays based on a set of predetermined rules, including for instance the following rules (or any subset thereof):
- said audience data of the respective displays of the OOH inventory are combined with said client target of the specific advertisement campaign to determine an impact value (e.g. audience volume for the client target) of the respective displays of the OOH inventory on said client target for said specific advertisement campaign, and said set of predetermined rules includes that: the higher the impact value of a period of time on a display for said specific advertisement campaign, the higher share of time is allocated to said specific advertisement campaign for this period of time on this display;
- said audience data of the respective displays of the OOH inventory are combined with said client target of other advertisement campaigns (previously booked) to determine respective impact value of the respective displays of the OOH inventory on said client target for said other advertisement campaigns, and said set of predetermined rules includes that: the higher the impact value of a period of time on a display for said other advertisement campaigns, the lower share of time is allocated to said specific advertisement campaign for this period of time on this display;

- said audience data of the respective displays of the OOH inventory are combined with said client target of the specific advertisement campaign to determine an impact value of the respective displays of the OOH inventory on said client target for said specific advertisement campaign, and said set of predetermined rules includes that: the higher the impact value of a period of time on a display for said specific campaign, the higher priority is given to allocation of this period of time on this display to the specific advertisement campaign;
- said availability data of the respective displays of the OOH inventory determine a level of booking of the respective displays of the OOH inventory and said set of predetermined rules includes that: the lower the level of booking of a display, the higher priority is given to allocation of this display to the specific advertisement campaign;
- said availability data of the respective displays of the OOH inventory include a minimum value and a minimum value for the share of time which may be allocated to a campaign, and said set of predetermined rules includes that: the share of time which is allocated to the campaign on this display is either 0, or is comprised between the minimum value and the maximum value;
- said set of predetermined rules includes that: displays and timing previously allocated to other advertisement campaigns may be re-allocated when allocating displays and timing to the specific advertisement campaign;
- said set of predetermined rules includes that: displays allocated to said specific advertisement campaign are distributed throughout the targeted environment.

When the allocation module 12 includes a neural network with two layers of neurons as that of Figures 4-5, operation thereof may be as follows:
- said client target includes at least one target number of impressions (target audience volume) and said first layer 19 successively scans all displays of the OOH inventory for each period of time and computes a vote representing a number of impressions (audience volume) being able to be provided by the display / period of time being scanned, among the target number of impressions, and
- the second layer 20 determines the timing (SOT within the considered period of time) allocated to said current advertisement campaign on said display being scanned, based on said vote and on the above-mentioned set of predetermined rules.

The first layer 19 is fed by the input layer, receiving for each scanned display / period of time:
- a first input with data related to the client target,
- a second input with data related to audience volume corresponding to displays and timing already allocated for the specific advertisement campaign,
- a third, optional input with timing already allocated to other advertisement campaigns on a display being scanned,
- a fourth input with data corresponding to all impressions available on the display being scanned for the client target and
- a fifth, optional input with data representing a ratio between a width of the display being scanned and a height of the display being scanned.

All the inputs and the output may be normalized figures comprised between 0 and 1.

The above allocation process is extremely quick even for a large geographical area GA having hundreds or thousands of displays 2, 3. For instance, the duration of the process for allocation of displays and timing to a specific advertisement campaign may be of the order of 1 ms, maximally a few seconds in the most complex cases.

It should be noted that the above system is usable for an OOH inventory including displays belonging respectively to several owners.

In addition to the above or as a variant, the allocation module 12 may also run a geographical distribution algorithm, ensuring that allocated displays are spread on all the target geographical area. The geographical distribution algorithm maximises the geographical distribution of panels: areas with high density of displays will be given more allocations of displays whilst areas with low density of displays will still be correctly represented in the specific set of displays allocated to the specific advertisement campaign.

## Claims

1. A computer implemented method for displaying contents from advertisement campaigns on displays belonging to an OOH inventory, the computer implemented method including:
- receiving on at least one allocation server (4), campaign data from a specific advertisement campaign including at least a date range, a targeted environment and a client target;
- allocating to the specific advertisement campaign, by the at least one allocation server (4), a specific set of displays (2, 3) from the OOH inventory and timing for displaying the specific advertisement campaign on each display of said specific set of displays, to fit the campaign data based at least on individual location data, availability data and audience data of the respective displays (2, 3) of the OOH inventory;
- dispatching contents corresponding to the specific advertisement campaign to the specific set of displays (2, 3),
wherein allocating said specific set of displays (2, 3) and timing is carried out by an artificial intelligence module (12) which is run by said at least one allocation server (4), said artificial intelligence module (12) being trained to optimally allocate displays (2, 3) and timing to advertisement campaigns.

2. The computer implemented method of claim 1, wherein said OOH inventory includes digital displays (2) each having at least one electronic screen (2b) and a player (2a) adapted to play contents on said at least one electronic screen (2b), and dispatching contents corresponding to the specific advertisement campaign to the specific set of displays, includes electronically sending said contents and corresponding timing to the respective players (2a) of specific digital displays (2) being part of the specific set of displays, memorizing said contents and timing by said players (2a) and playing said contents according to said timing on said at least one electronic screen.

3. The computer implemented method of claim 1 or claim 2, wherein said timing allocated to the specific advertisement campaign on a display (2, 3) includes a share of time.

4. The computer implemented method of claim 3, wherein said audience data of the respective displays of the OOH inventory includes respective audience data for various periods of time in the day, and said share of time is determined for each period of time.

5. The computer implemented method of claim 4, wherein the artificial intelligence module (12) is trained to optimally allocate displays and timing to campaigns based on a set of predetermined rules.

6. The computer implemented method of any of the preceding claims, wherein said artificial intelligence module (12) includes at least one neural network (17).

7. The computer implemented method of claim 6, wherein said at least one neural network (17) includes at least a first layer (19) and a second layer (20),
wherein said client target includes at least one target number of impressions, wherein said first layer (19) successively scans all displays (2, 3) of the OOH inventory and computes a vote representing a number of impressions being able to be provided by a display (2, 3) being scanned, among the target number of impressions,
and wherein said second layer (20) determines the timing allocated to said current advertisement campaign on said display being scanned, based on said vote and on a set of predetermined rules.

8. The computer implemented method of any of the preceding claims, including training said artificial intelligence module (12) by machine learning.

9. The computer implemented method of any of the preceding claims, including creating artificially generated advertisement campaigns and training said artificial intelligence module on said artificially generated advertisement campaigns.

10. The computer implemented method of any of the preceding claims, wherein said artificial intelligence module (12) is run simultaneously on a plurality of allocation servers (4).

11. The computer implemented method of any of the preceding claims, wherein the data relative to the OOH inventory is contained in a OOH inventory database and said at least one allocation server (4) has a RAM in which said OOH inventory database is entirely charged as objects modelled with bitmask.

12. A system (1) for displaying contents from advertisement campaigns on displays (2, 3) belonging to an OOH inventory, the system (1) including at least one allocation server (4) programmed to:
- receive campaign data from a specific advertisement campaign including at least a date range, a targeted environment and a client target;
- allocate to the specific advertisement campaign, a specific set of displays (2, 3) from the OOH inventory and timing for displaying the specific advertisement campaign on each display (2, 3) of said specific set of displays, to fit the campaign data based at least on individual location data, availability data and audience data of the respective displays of the OOH inventory;
the system being adapted to dispatch contents corresponding to the specific advertisement campaign to the specific set of displays (2, 3),
wherein said at least one allocation server (4) has an artificial intelligence module (12) which is trained to optimally allocate displays (2, 3) and timing to advertisement campaigns.

13. The system of claim 12, wherein said OOH inventory includes digital displays (2) each having at least one electronic screen (2b) and a player (2a) adapted to play contents on said at least one electronic screen (2a), wherein said at least one allocation server (4) is programmed to send electronically said contents and corresponding timing to the respective players (2b) of specific digital displays (2) being part of the specific set of displays, and wherein said players are programmed to memorize said contents and timing and to play said contents according to said timing on said at least one electronic screen (2b).

14. The system of claim 12 or claim 13, wherein said timing allocated to the specific advertisement campaign on a display includes a share of time.

15. The system of any of claims 12 to 14, wherein said artificial intelligence module includes at least one neural network (17) including at least a first layer (19) and a second layer (20),
wherein said client target includes at least one target number of impressions, wherein said first layer (19) is adapted to successively scan all displays (2, 3) of the OOH inventory and is adapted to compute a vote representing a number of impressions being able to be provided by a display (2, 3) being scanned, among the target number of impressions,
and wherein said second layer (20) is trained to determine the timing allocated to said current advertisement campaign on said display being scanned, based on said vote and on a set of predetermined rules.
